# EUROPEAN PATENT SPECIFICATION

(11) **EP 3 631 761 B1**
(45) Date of publication and mention of the grant of the patent: **08.07.2020**
(21) Application number: 17729800.7
(22) Date of filing: 24.05.2017
(51) Int. Cl.: G06T 11/00, G06K 9/00, H04N 5/33

(54) **METHOD AND SYSTEM FOR AUTOMATICALLY COLORIZING NIGHT-VISION IMAGES**
VERFAHREN UND SYSTEM ZUM AUTOMATISCHEN FÄRBEN VON NACHTSICHTBILDERN
PROCÉDÉ ET SYSTÈME DE COLORISATION AUTOMATIQUE D'IMAGES DE VISION NOCTURNE

(43) Date of publication of application: 08.04.2020
(73) Proprietor: HELLA GmbH & Co. KGaA, 59552 Lippstadt (DE)
(72) Inventor: BIRNHACK, Asaf, 10119 Berlin (DE); GLÄSER, Marian, 10117 Berlin (DE); SCHÄFER, Sören, 10245 Berlin (DE)
(86) International application number: PCT/EP2017/062607
(87) International publication number: WO 2018/215066

(56) References cited:
- US-A1- 2005 040 333
- US-B1- 8 836 793
- TOMIHISA WELSH ET AL: "Transferring color to greyscale images", ACM TRANSACTIONS ON GRAPHICS (TOG), ACM, US, vol. 21, no. 3, July 2002 (2002-07), pages 277-280, XP058167756, ISSN: 0730-0301, DOI: 10.1145/566654.566576
- ZHANG RICHARD ET AL: "Colorful Image Colorization", 17 September 2016 (2016-09-17), ICEC 2006; [LECTURE NOTES IN COMPUTER SCIENCE; LECT.NOTES COMPUTER], SPRINGER INTERNATIONAL PUBLISHING, CHAM, PAGE(S) 649 - 666, XP047355373, ISSN: 0302-9743 ISBN: 978-3-642-01969-2 [retrieved on 2016-09-17] cited in the application abstract; figures 1,2 pages 649-652
- LIMMER MATTHIAS ET AL: "Infrared Colorization Using Deep Convolutional Neural Networks", 2016 15TH IEEE INTERNATIONAL CONFERENCE ON MACHINE LEARNING AND APPLICATIONS (ICMLA), IEEE, 18 December 2016 (2016-12-18), pages 61-68, XP033055502, DOI: 10.1109/ICMLA.2016.0019 [retrieved on 2017-01-31] cited in the application

## Description

This application is directed at a method as well as a system for automatically colorizing night-vision images.

Night-vision systems can be used in a variety of settings, such as driver assistance systems, wildlife observation, military applications, security and surveillance systems or in picture or movie application, e.g. installed within a smartphone or other mobile camera. Night-vision images capture invisible radiation of objects and are often taken using an active source of invisible radiation, which is then reflected by the respective objects.

As light is absent or minimal at nighttime or in low light conditions, night-vision images are monochromic in appearance. Night-vision images have the advantage that they can be taken without visible light, based on capturing energy or distance distributions (in relation to distance law) by using, e.g., infrared, ultrasound or radar. However, due to the absence of color information and as night-vision images do not, in general, correspond well to a grayscale image of the same scene at daytime, it is difficult for a human user to understand, identify and/or distinguish relevant objects, which decreases the acceptance of imaging systems which are based on or augmented by night-vision images.

There have been several approaches in the literature to artificially augment night-vision images with color in order to highlight relevant features and to increase acceptance by human users. These approaches are based on different color space models, such as the RGB color space or the Lab color space. Furthermore, with a colored scene the object identification and natural appearance could increase the visual performance of the observer.

The RGB color space is based on an additive system in which red, green and blue light are added in order to reproduce a broad array of colors. The RGB color space is device-dependent, i.e. different devices detect or reproduce a given RGB value differently, based on the color elements used within the respective device. Color management schemes, which provide conversion algorithms taking into account the characteristics of different RGB devices, may be used for matching the appearance of colors across different input and output RGB devices such as color TVs, cameras, image scanners, computer and phone displays.

In the RGB color space, conversion of a color image to a grayscale image is not unique, as each color channel contributes to the luminance, or brightness, of the image. In order to convert an RGB image to a grayscale image, weighted sums of the color channels are computed, where the weights may be selected to simply average the brightness of the different color channels. Alternatively, depending on the individual image or application, different weights which favor one color channel may be used.

The Lab color space mathematically describes all perceivable colors in the three dimensions "L" for luminance and "a" and "b" for the two chrominance dimensions, representing the color-opponents green-red and blue-yellow. As opposed to the RGB color space, the Lab color space is device independent as the colors are defined independent of their nature of creation or the device they are displayed on.

The Lab color space is, in theory, a three-dimensional real number space, which, hence, contains an infinite number of colors. However, in practice, the space is usually mapped onto a three-dimensional integer space for device-independent digital representation, making the Lab space discrete for practical applications. Using the Lab color space, a grayscale version of a color image can be directly inferred by using only the luminance dimension while setting the two chrominance, or color, channels to zero.

As stated above, night-vision images are, however, different from grayscale versions of daytime images. While grayscale images of daylight images display grayscale values based (essentially) on the human perception of luminance of the original color image, night-vision images, which may be captured without or with very little visible light based on infrared, near-infrared, ultrasound, radar, LiDAR etc., essentially display energy and/or distance distributions which outline shapes but the luminance of which do, usually, not agree with the human perception of luminance during daytime.

In order to increase the acceptance and safety of night-vision systems, several approaches for artificially colorizing monochromic, or grayscale, night-vision images have been proposed in the literature.

US 8836793 B1 and EP 1496689 A1 each disclose a system for combining a (low-light) color image with a monochromic infrared image in order to provide an enhanced image obtained by fusion of the different input channel, with the enhanced image highlighting some of the infrared information in the color image.

These systems, however, are directed at driver assistance systems with visible artificial illumination through the head-lights of a vehicle and are not suitable for providing color images when light is very low or completely absent. Furthermore, several cameras or imaging sensors are helpful for capturing the different color and night-vision channels, which increases the complexity and cost of the system. Additionally, the performance, in particular of the color cameras, decreases during bad weather such as rain, fog or snow.

T. Welsh et al: "Transferring Color to Greyscale Images", ACM, July 2002, pages 277-280, XP058167756, discusses colorizing grayscale images, by transferring color between a source, color image and a destination, grayscale image. The procedure furthermore requires user interaction for selection of matching areas.

US 2011/0169911 A1 discusses a method for transforming monochromatic infrared images into a natural daylight image, wherein the transforming is performed based on statistical values determined from an RGB reference image.

As these approaches are purely statistical and might even require user interaction, they are not suitable for applications required to run in real-time.

Other approaches for colorizing monochromic images are based on machine learning algorithms and devices such as artificial neural networks and, in particular, convolutional neural networks.

In general, machine learning algorithms have the advantage that information which is too complex for a human observer may be automatically extracted from a large set of data. In supervised machine learning algorithms, training data is provided in the form of input samples along with their corresponding target samples and it is the goal of the machine learning training method to determine a function capable of reproducing, with high accuracy, the target samples from the corresponding input samples. The determined function is then used for predicting target values for previously unseen input values. Machine learning functions are usually determined by tuning the parameters of an adaptive model or function in order to minimize a predetermined loss function by using cross-validation or a similar concept.

Convolutional neural networks are particularly suitable for processing images containing several essentially independent objects, as they allow for local spatial feature analysis and prediction. This is achieved through using multiple layers of receptive fields with different resolutions which provide partially overlapping tilings of input data. Most layers of the convolutional neural network are only locally connected, thus re-enforcing local patterns while reducing computational cost. With respect to image data, the local analysis causes the convolutional neural network to be invariant with respect to translation operations of the input image.

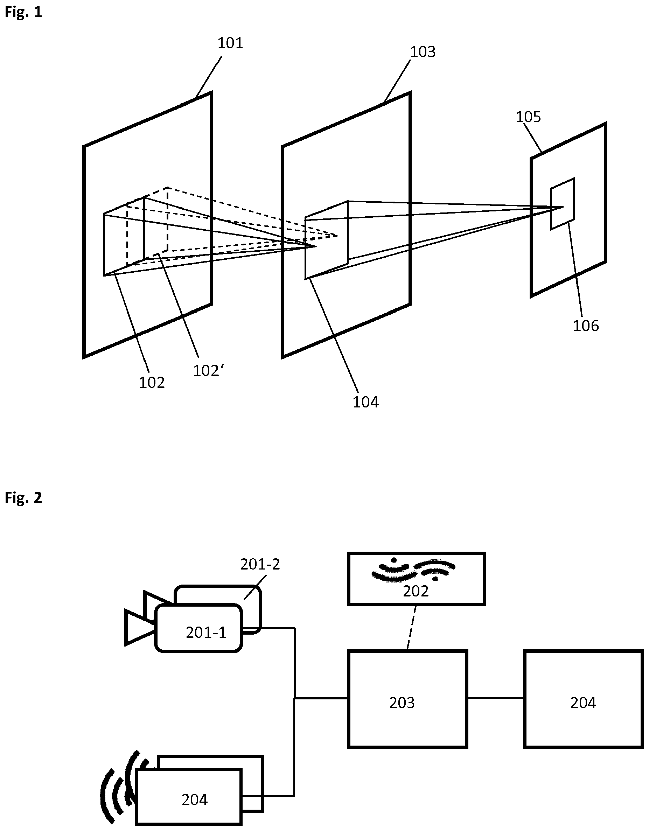

Fig. 1 schematically shows the main components of a convolutional neural network, where subregions 102, 102' of the input image 101 are analyzed using multiple feature maps 104 of the convolutional layer 103. Each feature map 104 is trained to detect a specific pattern, with the weights of each feature map being fixed, so that the same pattern may be detected at different locations in the input image. Applying a feature map 104 as a filter across the input image 101 in order to detect specific local patterns, therefore, amounts to a convolution of the respective weights with the input image. The subsequent sub-sampling layer 105 then serves to reduce the spatial resolution, resulting in an image subregion 106, having a reduced resolution, and may, again be used as an input to another convolutional layer with different feature maps.

Zhang et al., "Colorful Image Colorization", arXiv:1603.08511v5, describe a method for determining a plausible colorization of grayscale images by using convolutional neural networks. The training set is obtained from full-color (RGB or Lab space) images by using the grayscale values of each image as an input sample and the corresponding color values as the corresponding target sample.

The results achieved by Zhang et al. largely rely on perfect pixel-to-pixel correspondence between the pairs of grayscale and color images in the training set of images and on the fact that only the two color dimensions, i.e. the chrominance, of the original image need to be plausibly reconstructed, as the grayscale of the input image already corresponds to the luminance of the final prediction output.

Limmer & Lensch, "Infrared Colorization Using Deep Convolutional Neural Networks", in arXiv:1604.02245v3 discusses determining RGB color space images from infrared images. According to this approach, the training samples are captured using a multi-chip CCD NIR/RGB camera, which simultaneously takes both an RGB and an NIR image, thus ensuring a perfect pixel to pixel registration of both images. A convolutional neural network (CNN) is trained on these image pairs and the trained CNN is then used to simultaneously predict all three color channels of the target RGB image from input NIR image. The result is rather blurry and extensive post-processing is used in order to enhance and sharpen the raw output.

In order to increase user acceptance and to direct human attention to relevant objects of an image, the sharpness of the colorized image is of great importance. Also, in particular when processing video streams, colorization must happen in real-time and, preferably, locally, thus making it infeasible to use large databases or complex and time-intensive pre- or post-processing.

It is, therefore an object of the present invention to provide a method which allows for a computationally efficient way for determining sharp color versions of night-vision images.

This object is achieved by the method and system of the independent claims; further preferred embodiments are described in the dependent claims.

A method for generating a first color image from a first night-vision image, which may also be referred to as an input night-vision image, according to the present application comprises the steps of determining predicted chrominance values based on luminance values of the first night-vision image and generating the first color image, also referred to as an output color image by combining the luminance values of the first night-vision image with the predicted chrominance values. The predicted chrominance values are predicted by using a prediction function.

Throughout this application, the terms first night-vision image and first color image are, mostly, used to refer to the input night-vision image and the output color image, respectively. The term "first" is used in order to distinguish the images used in the prediction process from image pairs which are used in the training process, as described in detail below.

The first night-vision image may, preferably, be captured using a sensor or camera capable of detecting invisible radiation based, e.g. on infrared, near infrared (NIR), radar, LiDAR, ultrasound etc. An active invisible radiation or illumination source may be used, which emits radiation which is then reflected by objects which are in front or near the sensor. The captured data may be based on energy distributions or distance distributions (using a time-of-flight method). When infrared radiation is used, near infrared (NIR) and, in particular short wave infrared (SWIR), which ranges between 900 and 2500 nm may be used. SWIR has the advantage that it is not absorbed by water, thus allowing for capturing more accurate infrared images under bad weather conditions. In order to visualize night-vision images, they need to be transferred to a visible spectrum in order to generate a visible monochromic image. The used sensor may capture energies, depending on the resolution of the respective sensor, on a pixel-by-pixel basis, thus yielding an energy distribution of a captured region of interest.

The term "night-vision image" is used within this application to refer, e.g., to images which are captured using night-vision technology, i.e. technology which may be used for capturing images at night-time or, in general, under low light conditions or when visible light is completely, or nearly completely, absent. Thus, the term "night-vision image", as used throughout this application, may also comprise images which are captured, using night-vision technology, at day-time or using visible, artificial light. The term "night-vision image" may, therefore, refer to images captured using infrared radiation, low-light radiation, high level interpretation of artificial signals, ultrasound, radar, LiDAR etc. Night-vision images are captured using energy or distance distributions and are, using preprocessing corresponding to the respectively used capturing technology, converted into monochrome or grayscale images which can be interpreted by a human observer.

This method has the advantageous effect that the generated first color image retains the sharpness of the first night-vision image, as only the chrominance is predicted but the luminance is kept from the first night-vision image. The luminance of the first night-vision image and the predicted chrominance values are combined, based on the Lab color space or another color space which distinguishes between brightness and color channels, by combining for each component (such as a dot, pixel or the like) of the digital image the luminance, or brightness, value of said component with the respective chrominance, or color, values. The first color image therefore allows for an improved attention control of a human user, who can recognize objects faster due to the sharpness and color of the first color image, thereby increasing security.

This method is furthermore computationally efficient, as the prediction function can quickly (in real-time) determine the predicted chrominance values based on the luminance values of the first night-vision image and combining the luminance values of the first night-vision image with the predicted chrominance values only requires an overlaying of the different color scheme dimensions. Furthermore, the resulting first color image is sharp and does not require computationally expensive post-processing in order to sharpen the image.

The luminance values of a night-vision image usually differ from the luminance values of a corresponding color image taken during daytime. Thus, the first color image will, in general, look different from a color image taken at daytime. However, the first color image simultaneously provides sharp edges, which are obtained from the luminance values of the night-vision image, and color information, which is obtained from the predicted chrominance values. Sharpness and reasonably accurate color information are both vital for attention control of a human user. Blurry images can cause the user to become inattentive and tired, while monochrome images make is difficult for the user to distinguish relevant features.

The prediction function may be a pre-determined prediction function or prediction algorithm, which may be obtained from an entity, such as a remote server or subscription service, for providing such prediction functions, wherein it is possible that multiple prediction functions are provided depending on the (assumed) content of the images or on meta-data associated with the images, such as time of day or location. Alternatively, the method described above may comprise an additional step of determining the prediction function which maps luminance values of night-vision images to predicted chrominance values, wherein the predicted chrominance values are similar to the chrominance values of color images corresponding to the night-vision images, thereby allowing the determining of customized prediction functions in accordance with the nature of the night-vision images of a specific application scenario.

A night-vision image and a color image may, for example, be considered as "corresponding" if they show essentially the same of very similar scenery. For example if they are taken simultaneously, of if they are taken from the same of similar position or if they show the same objects.

Also, "similarity" between the predicted chrominance values and the chrominance values of corresponding color images can be understood in the sense of statistical similarity between the values representing said chrominance values. For example, similarity can be measured by using a loss function, which computes a measure of the inaccuracies between two data sets. Similarity can then be optimized by tuning the parameters of the prediction function in such a way that the loss function is minimized. Commonly used loss functions are mean absolute error, mean squared error or negative log likelihood.

In the following, the phrase "predicted chrominance values of the corresponding color images" will be used as synonymously with "predicted chrominance values wherein the predicted chrominance values are similar to the chrominance values of the corresponding color images".

Optionally, the step of determining the prediction function for mapping the luminance values of night-vision images to the predicted chrominance values of the corresponding color images may comprise the steps of obtaining several pairs of training images and determining the prediction function by training an adaptive model, or adaptive function, using a respective machine learning method on the pairs of training images.

The several pairs of training images, preferably at least 1000 or at least 10,000 pairs of training images, may each comprise a night-vision image and a color image, wherein the night-vision image and the color image depict an overlapping and/or substantially identical region of interest. To get better results it is preferably to train with more than 100,000 pairs. The number of training samples can be increased artificially by varying a pair in several ways such as mirroring in vertical/horizontal direction, twisting or translating the image.

The pictures depicting an overlapping and/or substantially identical region of interest essentially means that the night-vision image and the corresponding color image show the same scenery. The two corresponding images can, for example, be taken simultaneously and/or from the same or almost the same position. Differences between the two corresponding images are possible but should be only small, i.e. most of the depicted scenery and/or objects should be identical. Greater image similarity between the night-vision image and the color image of each pair of training images increases the accuracy of the prediction function.

The prediction function is preferably determined by training an adaptive model using a machine learning method, i.e. an adaptive model, such as a neural network, a convolutional neural network or another adaptive machine learning model suitable, in particular, for image processing and image prediction. Depending on the complexity of the data to be predicted and also depending on the desired quality, a number of hidden layers of the CNN can be either preselected or optimized within the training process. Of the several pairs of training images, the night-vision images, in particular the luminance values determined from the monochrome night-vision images are used as input images, while the chrominance values of the corresponding color images are used as target images.

"Training" of a function in the context of machine learning refers to the tuning of the parameters of an adaptive model in such a way that a predetermined loss function is optimized. In the present case (or generally in the case of regression), the loss function is based on the differences or dissimilarities between the predicted chrominance values and the actual chrominance values of the "ground truth" color image.

Before training the adaptive model using the respectively selected machine learning method, the pairs of training images may each be cropped and aligned in order to ensure a perfect or near perfect pixel-to-pixel correspondence between the two images of each pair of training images. If the night-vision image and corresponding color image of a training pair are captured from the same position or if the distance between the positions from which the images are captured is known, the images may be aligned by using a static, predefined translation operation of at least one image of each image pair.

If the camera positions are not precisely known and/or the two images of a training pair are not taken simultaneously, it may be helpful to perform more complex operations in order to align the two images of a training pair. Such an alignment may be determined taking into account possible distortions, such as parallax distortions cause by slightly different angles of the optical axes of the two cameras which are used for taking the night-vision image and corresponding color image, respectively. When aligning a night-vision image with a color image, the alignment may be based on aligning the luminance of the color image with the luminance of the night-vision image. While the luminance values differ for both types of images, certain features, such as gradients between adjacent pixels of the images may show similarities which can be used for aligning the images. Thus, characteristic points, such as pixels or groups of pixels, of the two corresponding images may be identified in the two images and the translation operation may then be determined based on said characteristic points. The aligned images are then cropped to discard portions of each image for which there is no corresponding portion in the other image.

Alignment of the images may also be based on minimizing a specific loss function, which provides a measure for the similarity or, respectively, dissimilarity of two images. It may also be possible to filter training pairs of images based on such a dissimilarity or loss function, resulting in discarding training pairs if they cannot be aligned well enough.

The resulting cropped and aligned image pairs depict aligned and substantially identical regions of interest. The training of the adaptive machine learning model may then be carried out based on the cropped and aligned training pairs, thus increasing the accuracy of the trained prediction function.

As an optional step after the images are cropped and aligned, a so-called stitched input image may be generated, which is obtained by combining the luminance values of the night-vision image with the chrominance values of the color image. Said stitched image does not contain the original luminance values of the color image, thus causing the brightness of the image to look different from the original color image. However, the stitched image still shows the features of the original color image with high sharpness and accuracy, as the color values are taken from the color image, thereby high-lighting colorful features of the depicted scenery, while the brightness, or luminance is taken from the night-vision image, thereby providing sharp and accurate edges of the stitched image.

Before the captured night-vision and color images are used for training the adaptive machine learning model, some preprocessing may optionally be performed on the images. In particular, the sensory output data of the cameras may be transformed into Lab color space image data. In particular, the night-vision images which capture energy and/or distance distributions are transformed into a visible monochromic image. Additionally, the images may be normalized. Normalization may include scaling of the image, adaption of the pixel values (such as luminance values) according to the mean or median of the image, segmentation of the image according to preselected parameters etc.

If the input color images are in RGB color space, these images may need to be converted to Lab color space prior to training the adaptive model and, possibly, also prior to cropping, aligning and/or stitching the respective corresponding images. While Lab color space is device independent, RGB color space is not device independent. Thus the conversion between Lab color space and RGB is, in general, device dependent.

The prediction function is, preferably, trained to predict the predicted chrominance values based on the luminance values of the first night-vision image without taking into account color and/or chrominance values except color and/or chrominance values of training images used for determining the prediction function.

In particular, chrominance or color information that was captured recently with respect to the point in time at which the first night-vision image was captured is not taken into account when determining, by using the prediction function, predicted chrominance values based on the luminance values of the first night-vision image. Thus, preferably, chrominance values are only used, as target values, during the training phase of the prediction function. The prediction function does, therefore, preferably, not use color and/or chrominance information as an input parameter. The only imaging data which is used as input for the prediction function is luminance and/or grayscale or other monochromic imaging data.

The prediction function, thus, preferably uses no chrominance values acquired after the training phase. If the prediction function is retrained or adapted, chrominance values are preferably only used during the retraining or adaptation of the prediction function and not during the subsequent predictions, i.e. applications of the trained and/or adapted prediction function.

In addition to the luminance values of the first night-vision image, the prediction function may receive additional input information, such as meta-data information which provides circumstantial information regarding, e.g., the time of day, the current weather etc. It is possible, that the prediction function determines a slightly different output for the luminance values of the first night-vision depending on such meta-data information.

As a special case, it is also possible that the prediction function determines the predicted chrominance values based only on the luminance values of the first night-vision image. In this case, no additional data besides the (optionally preprocessed) luminance values of the first night-vision image are used as input for the prediction function.

Not taking recent color information into account when determining the predicted chrominance values allows for using the method at nighttime or under other dark conditions without artificial visible light, thereby reducing irritation of humans. Also, in certain application scenarios, such as surveillance applications, it is desirable so use the described method while avoiding detection by others. It is, therefore, crucial to avoid using visible light.

If the night-vision images are based on infrared or near infrared technology, it may, however, be desirable to use an active source of infrared illumination, i.e. an illumination with invisible light, in order to increase the quality of the night-vision images. Active radiation may also be used with other night-vision systems, which may be based on radar, LiDAR, ultrasound or the like. In general, using active invisible radiation or illumination increases the quality of the captured images, as the radiation is reflected by the surrounding objects.

If the night-vision images are captured based on distance distributions rather than on energy distributions such as infrared, it may be helpful, to convert the distance distributions to an energy distribution (monochrome image) first. For example LiDAR data may be collected using a time-of-flight method. In order to obtain an energy distribution of the region of interest, which can be used as an input for image reconstruction,, the energy may be normalized and an energy distribution is determined by essentially removing the distance from the data using a predetermined distance grid.

Other LiDAR based systems (e.g. SPiM, SPAD) may be used to directly generate an energy distribution image by using the "counts" of the reflected energy which are then, in combination with the known amount of transmitted radiation, used to determine said energy distribution image. The distances may, optionally, be extracted from said energy distribution image.

When capturing training images, at least the color images need to be captured with visible light. One option for capturing the pairs of training images, therefore, is to simultaneously capture a night-vision image and a color image under day-light conditions, for example using a night-vision camera and a "regular" color camera, which are positioned next to each other, with the two cameras having parallel optical axes. Preferably, the distance between the two cameras is small, such as between 1 cm and 10 cm, preferable under 5 cm. Thus, the night-vision image and the corresponding color image captured this way contain substantially identical regions of interest.

Alternatively, the night-vision image and the color image of a training pair may be captured simultaneously using a multi-chip camera, which can simultaneously capture, e.g., an infrared and a color image using the same camera lens. Alternatively, if two distinct cameras are used for capturing the night-vision image and respective corresponding color image, if the optical axes of the two cameras are not parallel or if there is a greater distance between the two cameras, a more complex alignment and/or cropping process may be helpful, as discussed above.

It is also possible to capture the night-vision and corresponding color image of a training pair during daytime in such a way that both images are taken by the same camera, but using different filters of said camera. Preferably, to minimize the differences between the night-vision image and color image of a training pair, the two respective images of a training pair are taken right after another, e.g. within a few seconds, preferably within less than one second, for example within just a few milliseconds. This way of obtaining the training pairs is particularly useful in order to integrate colorization of night-vision images into an existing camera system, such as a surveillance system which uses a camera which can, depending on a filter or setting, be used for capturing either color images (usually used during daytime) or night-vision images (such as infrared images, usually used at nighttime).

Alternatively, it is possible that the night-vision image and corresponding color image of a training image pair are taken separately, i.e. the night-vision image is taken at night or under dark conditions, optionally using artificial invisible radiation, and the corresponding color image is taken at daytime, with the night-vision image and corresponding color image depicting substantially the same region of interest. For example, a stationary camera, such as a security or surveillance camera can be used for taking images at daytime and at nighttime. Stationary cameras may be cameras which are fixedly installed, so that they cannot be moved to another location without considerable effort, force or appropriate tools. A stationary camera within the meaning of the present application may be configured to rotate on a spot, zoom in and out or move the lens in a predefined manner using, e.g. a predefined articulating section of the camera. Training image pairs may then be determined using unsupervised or semi-supervised learning techniques, for example by calculating a similarity measure between the luminance of a daytime image and the luminance of a night-vision image. If the similarity exceeds a given threshold, then this pair of images can be used as a pair of training images. Alternatively, training image pairs can be determined based on shapes, which may be either predetermined or which are determined based on similarity measures. It is also possible to use several similar sub-images of as target values of a single night-vision image or sub-image. Using night-vision images captured at night-time as input values of the machine learning training method in combination with target images of color images taken at day time further increases the accuracy, as certain features of night-vision images look different at day-time than at night-time. For example the sky in a night-vision image taken at day-time will appear light, while the sky in a night-vision image taken at night-time will appear dark.

The training of the prediction function based on the several pairs of training images may, preferably, happen offline, i.e. on a server which is located in a different location from the location of the cameras which are used for capturing the pairs of training images. Thus, it is possible that the training of the prediction function may happen entirely before the prediction phase. For example one or more prediction functions may be provided within a system implementing the described method, or different prediction functions may be available for purchase by a customer.

As another preferred option, the prediction function may be adapted when new pairs of training images are obtained. Said adapting of the prediction function may happen offline or online and may, e.g., be part of a subscription service, such as a cloud-based or other over-the-air service, which periodically provides one or more updated prediction functions to the customer. For example, it is possible that the entire prediction function is retrained periodically based on all training pair of images obtained so far. By doing this, the accuracy of the prediction function may be improved. Alternatively, in particular if the training images change over time, it is also possible to retrain the prediction function periodically, but only taking the most recently captured training image pairs into account. For example, a time threshold could be given after which previously obtained pairs of training images are discarded. Adapting the prediction function based on new and/or recent training data has the advantage of increasing the accuracy of the prediction function. It is also possible that the prediction function is updated almost continuously using an air-interface based e.g. on wireless or mobile network technology.

Depending on the specific adaptive model on which the prediction function is based, the training method may involve the identification of features based on characteristic shapes and /or shading and the subsequent determination of the predicted chrominance values based on the luminance values of the first night-vision image may be based on said features. Said identification of features is, preferably, unsupervised, in the sense that ground truth values regarding specific features within the training images are not provided.

In particular, when using convolutional neural networks, tilings of the input images are determined and individual features are identified using trained feature maps or prediction maps. Feature maps are essentially a set of weights and may serve as a kind of filter by activating a respective filter function only if the weighted sum of the respective tile of the input image exceeds a given threshold. Identifying features such as cars, people, trees, traffic signs, general road-side signs, different vehicle classes, animals etc. in a night-vision input image may be beneficial, as features often have specific associated color schemes. The weights of each of the feature maps are adapted and/or optimized during the training phase. Said weights may then be used within the prediction function, where they may be referred to as prediction maps. Thus, using feature identification within the prediction function may help increase the accuracy of the predicted chrominance values. The features of an image are, preferably, inferred by the training algorithm for the prediction function on its own without predefining said features. Convolutional neural networks can, for example, receive, as an input parameter, a number of features to be identified. Optimizing said number of features to be identified by the convolutional neural network can then be achieved within the training phase using, e.g., a grid search and cross-validation to minimize a given loss function.

Alternatively or additionally, it is also possible to identify certain objects based on characteristic shapes and structures during a pre-processing step. Said pre-processing step for object identification may be performed based on known, or pre-determined, characteristics, such as geometric shapes of traffic signs. The known or predetermined feature maps of the pre-processing step may be used as prediction maps within the prediction function in order to identify respective objects.

The described system and method can be used for colorizing night-vision video streams, e.g. by colorizing the individual images obtained as frames of a night-vision video stream. The frame rate of the captured night-vision video stream as well as the displayed color video stream may depend on the shutter speed of the camera or on the application scenario and may range between few (e.g. 2 - 3) frames per second for scenarios with little movement and several dozen frames per second for application scenarios where a lot of movement may be expected, such as driving at high speed.

Besides the described method, this application is also directed at a system for automatically generating a first color image from a first night-vision image. The system comprises at least one camera, which is configured for capturing the first night-vision image. The system also comprises a processing unit which is configured for determining, by using a prediction function, predicted chrominance values for the luminance values of the first night-vision image and for generating the first color image by combining, or "stitching", the luminance values of the first night-vision image with the predicted chrominance values. The prediction function is a, preferably predetermined, mapping which maps luminance values of night-vision images to chrominance values of corresponding color images. The system furthermore comprises a display for displaying the first color image to a user.

The system has the advantageous effect that the complexity of the system is low, as only night-vision images need to be captured. Also, the prediction function provides for a quick and easy (real-time) colorization of the first night-vision image. If real-time colorization is not possible, then, alternatively, colorized sub-images or objects may be added successively into the original first night-vision image by overlaying the predicted chrominance values over the respective object or sub-image of the first night-vision image. That way a step-by-step colorization is possible, which reduces the processing demand, thereby increasing the efficiency of the colorization method.
Preferably, the components of the system are located within one location, i.e. within one property, one building, one vehicle or the like. Alternatively, it is also possible that the processing unit and/or the display are remotely located with respect to the camera, thus providing a remote colorized view of a night-vision image or a night-vision video stream.

The prediction function may be a trained prediction function, which is based on an adaptive model and trained using a machine learning method, as described with respect to the method above.

The system may, optionally contain more than one night-vision camera, so that the first night-vision image is a combined image of several images which are captured, preferably simultaneously, using several cameras.

The system may optionally comprise at least one camera for capturing color images, for example at daytime. It is possible that the at least one camera for capturing night-vision images may also, by using different filters or settings, capture color images. Preferably, the cameras comprised by the system are configured for capturing pairs of images depicting overlapping or substantially identical regions or interest, wherein each pair comprises a night-vision image and a color image, preferably taken under daylight or using visible illumination. The pairs of images captured by the cameras can then be transmitted to the processing unit.

Furthermore, the processing unit may, optionally, be configured for obtaining several pairs of training images, each comprising a night-vision image and a corresponding color image, wherein the night-vision image and the color image depict overlapping or substantially identical regions of interest. The pairs of training images can, for example, be obtained from the at least one camera of the system or from another image source such as a video stream, a data base or the internet. The pairs of training images may optionally be preprocessed by the processing unit in order to crop and align each image pair as discussed in detail above with respect to the method. Alternatively, the several pairs of training images which are received by the processing unit may already be preprocessed training pairs and/or the training pairs of images may not require additional preprocessing steps. The processing unit may then further be configured for determining the prediction function by training an adaptive model using a machine learning method, as discussed in detail above with respect to the described method, to determine chrominance values of the color images of the color images from the luminance of the night-vision images.

The training of the prediction function may alternatively be performed by a second processing unit, which may be located in the same location as the first processing unit or which may be located remotely, in another location.

Optionally, the at least one camera which is comprised by the system is also used for capturing the pairs of training images or at least for capturing the night-vision images of the pairs of training images (in which case another camera may be used for capturing the corresponding color images). This has the advantage that the training images are similar to the first night-vision image, which increases the accuracy of the predicted chrominance values. Alternatively, different cameras may be used for capturing the training images. This has the advantage that training may happen independently of the system used for determination of the predicted chrominance values based on the luminance values of the first night-vision image.

Furthermore, the first night-vision image may be an infrared image and the system may comprise at least one active radiation source, such as an infrared illumination source, which is used for invisible illumination, thereby increasing the quality of the first night-vision image. The night-vision images of the several pairs of training images may also be captured using the active radiation source or, alternatively, another active radiation source.

Optionally, and as discussed in detail with respect to the described method, the processing unit may further be configured to adapt the prediction function when new pairs of training images are obtained, for example by capturing the new pairs of training images using the at least one camera, or by receiving the new pairs of training images from a remote server or other processing unit.

This description is, furthermore, directed at using the described system within a driver assistance system. In this case, the at least one camera may be a non-stationary camera configured for capturing the first night-vision image in front of, behind or to the side of a vehicle while driving at night-time or under poor light conditions. A non-stationary camera is a camera which may be moved to a different location without disassembling the camera. A camera which is fixedly installed within a vehicle may, therefore, be considered to be a non-stationary camera, as the camera can move with the vehicle. Even when the vehicle is parked on the side of the road, a camera which is installed within the vehicle is still considered as being a non-stationary camera. The processing unit, which is preferably installed within the vehicle, is then configured to preprocess the night-vision images and determines, based on the luminance values of the night-vision image and by using the prediction function implemented within the processing unit, the predicted chrominance values which correspond to the first night-vision image.

The processing unit is, in this case, furthermore configured for determining the first color image by combining, or "stitching", the luminance values of the first night-vision image with the predicted chrominance values and to display the resulting first color image on a display within the vehicle. The display can, for example, be a display which is integrated in one of the windows, such as the windshield, or the display can even replace the windshield or a window, thereby providing better visualization of the surrounding of the vehicle. Alternatively, the display may be a display which is located within the car, and which, e.g. replaces one of the mirrors. Only an invisible source of illumination may be helpful, depending on the kind of night-vision system used, thus irritation of humans or wildlife is reduced and the overall security is increased.

Alternatively, the described system may be used within a security or surveillance system. In this case, the at least one camera may be a stationary camera, which is used for capturing the first night-vision image of, for example, a property or a location which is to be monitored. Stationary cameras may, for example, be installed on the side of the road to capture images or video streams of passing vehicles. The images captured by road-side cameras may then be transmitted to passing cars or may be used for training purposes. The captured first night-vision image is then, optionally, preprocessed by the processing unit and the processing unit is configured to determine the predicted chrominance values based on the luminance values of the captured first night-vision image.

Many security systems are already capable of capturing night-vision images or video streams, such as infrared, images or video streams and displaying said night-vision images or video streams on a display. It is, therefore, easily possible to add a processing unit configured for predicting chrominance values based on the luminance values of a night-vision image to an existing surveillance system, thereby increasing the quality of the displayed images, which are combined from the luminance values of the input night-vision image or video stream and the respectively predicted chrominance values, with only small, inexpensive changes required to the system.

The embodiments and preferable implementation details described with reference to the method can also be applied with respect to the described system and vice versa.

In the following, preferred embodiments of the present application are described with reference to the figures, wherein
Fig. 1 schematically shows a convolutional neural network;
Fig. 2 shows a conceptual view of an embodiment of the described system;
Fig. 3 shows two images and their respective cropped and aligned sub-images;
Fig. 4 shows the work-flow of an embodiment of the described method for training a convolutional neural network and for predicting chrominance values using the convolutional neural network;
Fig. 5 shows a detailed control-flow diagram of a preprocessing method in accordance with the described method; and
Fig. 6 shows a detailed control-flow diagram of a prediction method in accordance with the described method.

Fig. 1, which was already discussed in the background section, shows a schematic view of a convolutional neural network from the state of the art. As described above, subregions 102, 102' of the input image 101 are scanned using features maps 104 associated with the convolutional layer 103. The feature maps 104 are trained and function as filters in order to detect local patterns in the input image 101. The output of the convolution layer 103 is subsequently sub sampled by a sub-sampling layer 105 in order to reduce the spatial resolution.

Fig. 2 shows a system for displaying colored images independently of the current light conditions. To achieve this end, an NIR camera 201-1 as well as a color camera 201-2 are provided and connected to a processor 203. The processor 203 is configured for receiving and images from either of the cameras, to determine which image to display, to process the received image, if necessary and to display an output image on the display 204. The processor is furthermore connected to a transceiver 202, via which additional data or information may be sent or received. The transmitter/receiver can also be used for data transfer to a server and a decentralized data processing could be established. Furthermore, with the uploaded images an online-training of the DNNs is possible. The transmission of increased trained models to the processing unit (203) is possible as the transmission of uploaded and online colorized NIR images back to the system.

Alternatively, the system shown in Fig. 2 may also be realized using a single camera 201-1, which is configured for capturing both night-vision and color images. In this case, the second camera 201-2 can be omitted. The single camera 201-1 can either be a multi-chip camera which simultaneously captures night-vision (such as infrared) and color images or the single camera 201-1 may use different filters within its optical channel to capture either a night-vision or a color image.

Under daylight conditions (as determined by analyzing the brightness of the captured images or, alternatively, by a separate, additional brightness sensor), the color camera 201-2 is active and the image, or respective video stream captured by the color camera is shown in the display.

If there is insufficient light for capturing color images, the infrared radiators 204 are turned on in order to illuminate the surroundings with invisible light. The NIR camera 201-1 then captures NIR images. The processor 203 receives these images from the NIR camera 201 and determines, based on a prediction function stored within the processor or associated memory, chrominance values for the NIR images and generates a colorized output image by combining the predicted chrominance values with the luminance values of the received NIR image. The colorized output image is then displayed on the display 204.

A setup similar or identical to the system described with reference to Fig. 2 above may also be used for capturing pairs of training images. In this case, the color camera 201-2 and the NIR camera 201-1 simultaneously capture images, preferably under daylight conditions. These image pairs are then received by the processor 203, which is configured for training a convolutional neural network to predict the chrominance values of the captured color images from the luminance values of the captured night-vision images. The determined prediction function may be transmitted, via the transceiver 202, to other processors or online services.

This system can, for example, be applied within a driver assistance system for digitalizing one or more rear-view mirrors. In this case both cameras 201-1 and 202-2 are installed on the rear of a car. Depending on the current light conditions, the digital display replacing the rear view mirror either shows the color image captured by the color camera 201-2, or the digital display shows the artificial color image, which was generated by combining the luminance of the NIR image captured by the NIR camera 201-1 with the predicted chrominance values which were determined by the processor using a pre-trained prediction function.

In case of a digital rear-view mirror is additionally possible to track the position of a human observer of the display and to adapt the displayed content accordingly. The displayed content during day as well as during nighttime can further be augmented with additional information, such as route information or object labeling.

In an alternate embodiment, the system which was described above with respect to rear-view mirrors of cars can also be applied to augment of replace a windshield or other window in a moving device such as a car, military vehicle, airplane or ship. In particular, it is possible to replace the light emitting systems (such as head lights) of a vehicle by invisible radiation emitters, which illuminate the surroundings with invisible light and enable capturing of high quality night-vision images. These night-vision images can then be recolorized by adding predicted chrominance values, as determined by a preconfigured prediction function, to the monochromic NIR images. In particular, the windshield or respective window can be semi-transparent or switchable between transparent and non-transparent. In case of a semi-transparent display, the predicted chrominance can be projected onto the display in order to augment the natural view of the surroundings.

A system as shown in Fig. 2 can also be used in wearable devices such as digital systems for helmets, glasses or binoculars. In this case, the NIR-camera is located close to the display in order to ensure a realistic optical axis of the displayed image. The NIR camera captures NIR images, which are forwarded, in real-time, to a small processor, which may either be included in the wearable device or which is connected to the wearable device either with a wire or wirelessly. The processor determines chrominance values based on the received NIR image and displays these chrominance values on the respective display. The display can be a transparent or semi-transparent display onto which the chrominance values in respect to the luminance of the picture are projected to highlight objects, while still allowing the user to view the actual surroundings through the wearable device. Wearable devices may optionally comprise additional radiators for increasing the quality of the captured images.

According to an embodiment of the system described in this application, digital images taken at nighttime may be augmented and/or recolorized. Images which are taken using an NIR camera in dark condition can either immediately or later be transferred to a processor, where a colorized version of the NIR image is determined by predicting chrominance values of the NIR image and combining the predicted chrominance values with the luminance values of the NIR image. The colorized images can then be printed, displayed, shared with friends or uploaded to a website. Video stream taken, for example, using a night-vision enabled smartphone, a tablet or a digital camera can later be recolorized, thus improving the quality of images or videos captured at night time. An active source of radiation might be used in order to provide invisible illumination. Alternatively, the images or video may be captured without an artificial invisible illumination source. For example, night vision images can also be captured during day time and can later be recolorized and/or augmented with simultaneously captured color information, thus providing additional options for processing image data.

Night-vision systems are also frequently used in security and/or surveillance applications. In surveillance application it is often desirable to minimize or eliminate visible light, in order to avoid detection by others. However, night-vision images captured without visible light are monochromic, thus making detection of moving objects by human security staff difficult and tiring. The productivity of security staff can greatly be improved if colorized images are displayed, allowing easier detection of people or foreign objects. As described above with respect to Fig. 2, a security system could similarly use an NIR camera as well as a color camera, with the processor selectively determining whether to display the image of the color camera or whether to display a recolorized version (obtained as described above by using a pre-trained prediction function) of the NIR image.

Often existing security systems are already equipped with a color camera as well as a night-vision, or NIR, camera. In some security systems, a single camera capable of capturing either color or NIR images, based on a filter or setting is used. A display is also routinely already provided in a surveillance system. It is, therefore, possible to simply add a processor to an existing surveillance system, wherein the processor is configured to process NIR images as described in this application, thereby providing an easy and cost-efficient improvement of existing surveillance systems.

For private security applications, such as the surveillance of a private property or a children's playroom, it is also possible to colorize the captured night-vision images using a simple add on which is either installed locally on a private computer or through a web-based service. The final image may then be displayed on a mobile device of the user, such as a smart phone or tablet, or on a fixedly installed monitor. The user can, therefore detect a dangerous situation more easily and alert the police or security staff if necessary. The focus of the security camera can, optionally, be adapted based on the distance to objects which are currently within the field of vision of said camera.

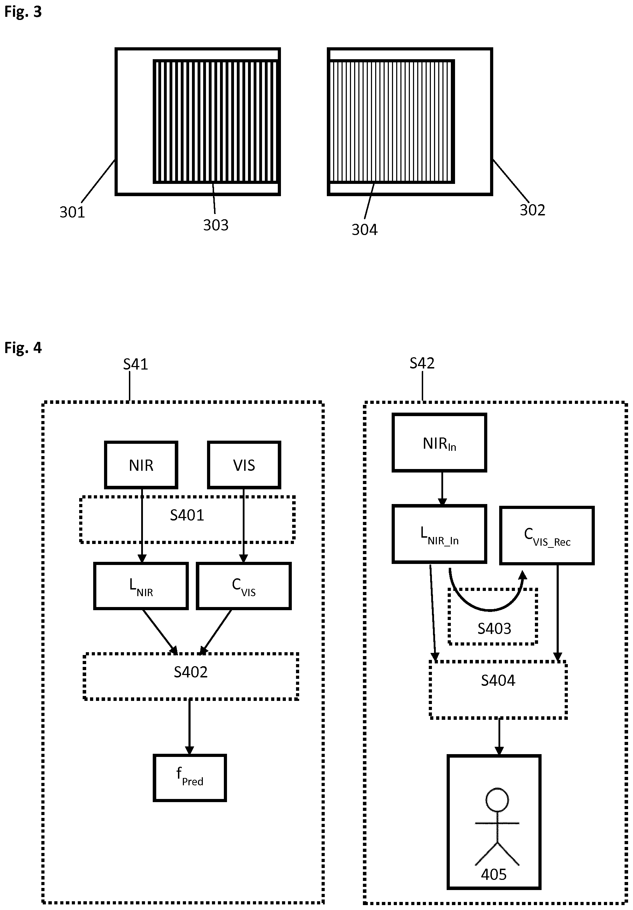

Figures 3 - 6 show embodiments related to the training and prediction process which is implemented within the processor or computer discussed with respect to Fig. 2.

In order to determine the prediction function used for determining the predicted chrominance values based on luminance values of a night-vision image, as discussed with respect to the foregoing embodiments, a training data set of pairs of, on the one hand, NIR images and, on the other hand, corresponding color images, needs to be collected. This can be done by using an NIR camera as well as a color camera, which are placed right next to each other and which simultaneously capture images of the same setting. The two cameras have parallel optical axes and are, preferably, placed less than 5 cm apart. For capturing the training images, it is possible to use two identical color cameras which are each equipped with corresponding filters for blocking either the NIR components or the visual components, so that one camera effectively captures NIR images while the other camera effectively captures color images.

Fig. 3 schematically shows an NIR image 301 and a color image 302 which were captured simultaneous by a camera system as described above. As the cameras are located just a few centimeters apart, the content of the captured images 301 and 302 differ only slightly. In particular, the two images have an overlapping region of interest, i.e. a sub-image 303 of the NIR image 301 contains the same content as a sub-image 304 of the color image 302. While, of course, the NIR sub-image 303 is monochromic and the color sub-image 304 has full color, the two objects nevertheless show the same objects and can, therefore, be used as a training sample for training the prediction function. In order to successfully train an adaptive model using a machine learning method based on a set of training images, it is helpful to collect a large number, i.e. 10,000 or, preferably 100,000 or more image pairs. Ideally the training images should all show an application specific content. For example if the application is directed at a driver assistance system, the training images should be images of roads and vehicles. For broader applications, several prediction functions can be determined, each of which applies to a certain sub-application. The relevant prediction function may then be selected based on additional data, such as meta-data or sensory data, or based on a simple analysis of the input image.

The training and subsequent application of the prediction function is schematically outlined in Fig. 4, which shows the process of training S41 a machine learning model, or adaptive model, by using a machine learning method based on a training set of image pairs as well as the process of determining S42 a colorized version of a night-vision input image L_{NIR_In} by using the prediction function.

When training the prediction function f_{Pred}, several pairs of images each comprising a night-vision, in this case a near-infrared, image NIR and a color image VIS are first preprocessed S401. Preprocessing involves steps such as cropping and aligning each respective image pair and extracting the relevant data from each of the images. In particular, given a pair of an NIR image and a color image VIS, a luminance L_{NIR} of the NIR image is extracted and a chrominance C_{VIS} of the color image VIS is extracted. The luminance of the color image is not used in the further training method and may be discarded.

A preselected adaptive model, such as a convolutional neural network is then trained using a respective machine learning method, to determine S402, the prediction function f_{Pred} on the datasets, wherein the luminance values L_{NIR} of the NIR images are used as input values while the chrominance values C_{VIS} of the color images VIS are used as target values.

After the prediction function f_{Pred} has been determined, said prediction function is loaded into the memory associated with the processor on which the determination of predicted chrominance values for newly input night-vision images (previously unseen night vision images) is to be carried out.

When a new night-vision image NIR_{In} is captured, the luminance L_{NIR_In} of this image is first determined. Then, predicted chrominance values C_{VIS_Rec} are determined S403, taking into account, possibly among other operations, the prediction function f_{pred}. The reconstructed, predicted chrominance values C_{VIS_Rec} and the luminance values L_{NIR_In} of the input image are then combined S404 in order to generate an output image 405. Said output image preserves the sharpness of the original input image NIR_{In} while adding realistic colors for improved visibility of features and better attention control of a human observer.

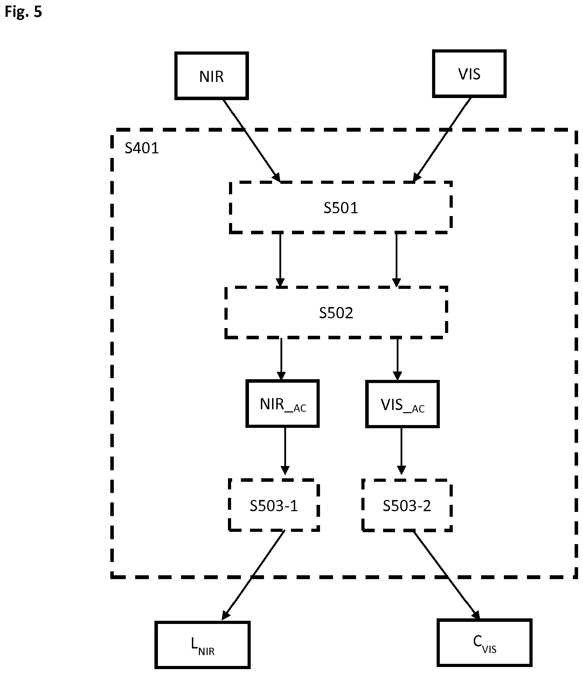

Fig. 5 shows a more detailed control-flow of preprocessing S401 of the pairs of night-vision images NIR and the color images VIS prior to determining the prediction function. For each pair of corresponding images NIR and VIS, corresponding points in both images are first identified S501 in order to determine a translation operation, which is helpful in order to align the pair of corresponding images. After the translation operation has been determined, the images are cropped and aligned S502 in order to generate identical or almost identical regions of interest of both images, thereby ensuring a good pixel-to-pixel correspondence of both images. As the luminance of the output image is taken directly from the luminance of the input night-vision image, the sharpness of the night-vision image is preserved. Slight deviations between the two images in each pair of training images can, therefore, be tolerated and a perfect pixel-to-pixel correspondence between the two images of a training pair are not necessary, as the prediction is focused on the features of the image. Using a rolling shutter, it is, for example, possible to compensate a deviation of several hundreds of pixels, for example of up to 250 px between the color image and night-vision image of a given training image pair.

The cropped and aligned images NIR_{AC} and VIS_{AC} are then further processed in order to extract the relevant data of each image. In particular, the luminance L_{NIR} of the cropped and aligned night-vision image NIR_{AC} is extracted S503-1, and the chrominance C_{VIS} of the cropped and aligned color image VIS_{AC} is extracted S503-2.

The resulting pair of image data L_{NIR} and C_{VIS} is then further used, as discussed with respect to Fig. 4 above.

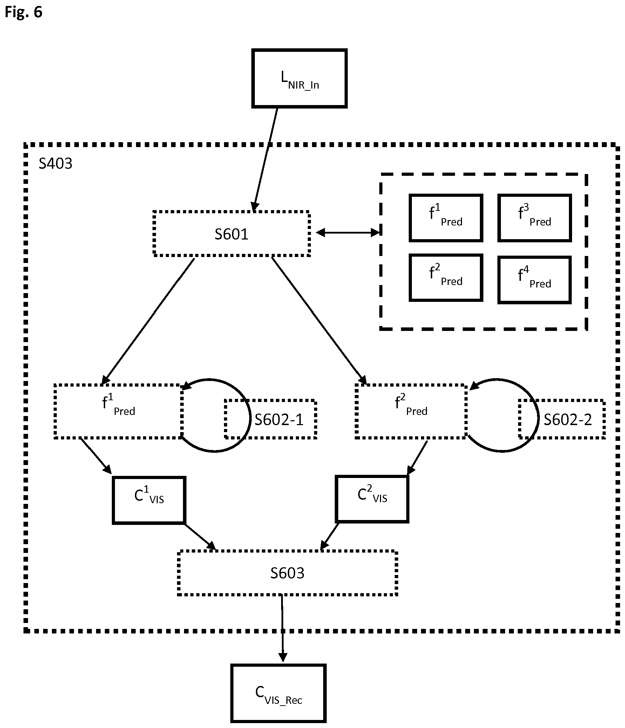

Fig. 6 shows, in detail, how predicted chrominance values are determined S403 based on luminance values of a night-vision image.

The luminance values L_{NIR_In} of the night-vision image are first used for selecting S601 one or more suitable, predetermined prediction function from a selection of prediction functions f¹_{Pred}, f²_{Pred}, f³_{Pred} and f⁴_{Pred}, which are available in the local memory associated with the processor. Each prediction function has been trained on a specifically chosen training set, which makes said prediction function suitable for performing predictions based on input images which are similar to the input training set. For example, one prediction function can be suitable for predictions in good weather while another one is suitable for bad weather conditions. Also, the remaining visible light or the time of day at which the night vision input image, from which the luminance values L_{NIR_In} were extracted, can be taken into account when selecting S601 one or more suitable prediction functions. Each of the selected prediction functions f¹_{Pred}, f²_{Pred} then determines chrominance values for the input luminance values by scanning S602-1, S602-2, using a grid or tiling of the input image or respective luminance, the luminance values of the input image in order to detect objects which are known to the prediction function. If a known object (based, e.g. on filter functions and weights of the underlying convolutional neural network) is detected, the chrominance is assigned based on known chrominance values of the respective object. If no object is detected, the chrominance value is assigned based on averaging the color values, possibly taking into account nearby pixels or objects. It is possible that the input night-vision image is segmented, based on a preprocessing algorithm and different prediction functions may be used for different sub-images and the resulting prediction results are then combined. For example one prediction function can be used for recolorizing the entire input night-vision image, while another is used for glare reduction a third prediction function is used for high-lighting road-side signs or other features of particular importance while yet another prediction function is used for adapting chrominance values to account for color blindness, such as red-green blindness of human users.

As each prediction function is slightly different, the determined chrominance values C¹_{VIS} and C²_{VIS} may differ slightly. The output chrominance C_{VIS_Rec} is then determined by performing a fusion S603 of the chrominance values determined by the different prediction values. The fusion can, in particular, overlay or average the chrominance of the determined chrominance values C¹_{VIS} und C²_{VIS} for each pixel or object. Alternatively, to generate more vibrant colors in the output chrominance C_{VIS_Rec}, the values or the determined chrominance values for each selected prediction function can be maximized. Each of the prediction functions stored in the memory associated with the processor can be adaptively re-trained. Preferably, training is performed offline and periodically or whenever a sufficient number of new training image pairs has been collected. After re-training, the re-trained prediction function is then transmitted to the processor, via the transceiver 202.

## Claims

1. A method for generating a first color image (405) from a first night-vision image (NIRin), the first color image being in a color space which distinguishes between luminance and chrominance values, the method comprising
- determining (S41) a prediction function (f_{Pred}) which maps luminance values of night-vision images to predicted chrominance values (C_{VIS_Rec}), wherein the predicted chrominance values (C_{VIS_Rec}) are similar to chrominance values of color images taken at day time corresponding to the night-vision images by
∘ obtaining several pairs of training images, each pair comprising a night-vision image (NIR) and a color image (VIS), wherein the night-vision image (NIR) and the color image (VIS) depict an overlapping and/or substantially identical region of interest (303, 304);
∘ determining (S41) the prediction function (f_{Pred}) by training a machine learning model on the training images to predict the chrominance values (C_{VIS}) of the color images (VIS) from the luminance values (L_{NIR}) of the night-vision images (NIR);
- determining (S403), by using the prediction function (f_{Pred}), predicted chrominance values (C_{VIS_Rec}) for the first color image based on luminance values (L_{NIR_In}) of the first night-vision image (NIRin);
- generating the first color image (405) by combining (S404) the luminance values (L_{NIR_In}) of the first night-vision image (NIR_{In}) with the predicted chrominance values (C_{VIS_Rec});
wherein the machine learning method used for determining the prediction function (f_{Pred}) is based on neural networks; and wherein the night-vision image (NIR) and the color image (VIS) of at least some of the several pairs of training images are taken separately, wherein the night-vision image (NIR) is taken at night or under dark conditions and the corresponding color image (VIS) is taken at daytime using visible light.

2. The method according to any of the preceding claims, wherein the prediction function (f_{Pred}) determines the predicted chrominance values (C_{VIS_Rec}) based on the luminance values (L_{NIR_In}) of the first night-vision image (NIR_{In}) without taking into account captured color and/or chrominance values except for color and/or chrominance values of training images used for determining the prediction function (f_{Pred}).

3. The method according to any of claims 1 to 2 wherein the first night-vision image (NIR_{In}) and/or the night-vision images (NIR) of the several pairs of training images are infrared or near infrared images obtained while using an active source of infrared illumination.

4. The method according to any of claims 1 to 3, further comprising the step of adapting the prediction function (f_{Pred}) when new pairs of training images are obtained.

5. The method according to any of claims 1 to 4, wherein the machine learning method used for determining the prediction function (f_{Pred}) is based on convolutional neural networks.

6. The method according to any of claims 1 to 5, wherein training the prediction function (f_{Pred}) comprises identifying feature maps (104) based on characteristic shapes and shading of the pairs of training images and wherein the predicted chrominance values (C_{VIS_Rec}) are determined by the prediction function (f_{Pred}) based on the first night-vision image (NIR_{In}) taking into account said feature maps (104).

7. System for automatically generating a first color image (405) from a first night-vision image (NIR_{In}), the first color image being in a color space which distinguishes between luminance and chrominance values, the system comprising:
- at least one camera (201-1, 201-2) configured for capturing the first night-vision image (NIR_{In});
- a processing unit (203) configured for determining, by using a prediction function (f_{Pred}) which maps luminance values of night-vision images to chrominance values of corresponding color images, predicted chrominance values (C_{VIS_Rec}) for the first color image based on the luminance values (L_{NIR_In}) of the first night-vision image (NI-R_{In}); and for generating the first color image (405) by combining the luminance values (L_{NIR_In}) of the first night-vision image (NIR_{In}) with the predicted chrominance values (C_{VIS_Rec});
- a second processing unit which is configured for (i) obtaining several pairs of training images, each pair comprising a night-vision image and a corresponding color image, wherein the night-vision image and the color image depict overlapping and/or substantially identical regions of interest; (ii) determining the prediction function (f_{Pred}) by training a machine learning method to predict the chrominance values of the color images from the luminance values of the night-vision images, wherein the predicted chrominance values (C_{VIS_Rec}) are similar to chrominance values of color images taken at day time corresponding to the night-vision images;
- a display (204) for displaying the first color image (405) to a user; wherein the machine learning method used for determining the prediction function (f_{Pred}) is based on neural networks; and wherein the night-vision image (NIR) and the color image (VIS) of at least some of the several pairs of training images were taken separately, wherein the night-vision image (NIR) was taken at night or under dark conditions and the corresponding color image (VIS) was taken at daytime using visible light.

8. The system according to claim 7, wherein the at least one camera is an infrared camera and the system further comprises:
- at least one infrared illumination source, wherein the at least one camera (S201-1, S201-2) is configured for capturing the infrared or near infrared images while the infrared illumination source is active.

9. The system according to claim 7 or 8, wherein
- the other processing unit is further configured to adapt the prediction function (f_{Pred}) when new pairs of training images are obtained.

10. Use of the system according to claims 7 to 9 within a security or surveillance system, wherein the camera (201-1, 201-2) is a stationary camera.

11. Use of the system according to claims 7 to 9 within a driver assistance system, wherein the camera (201-2, 201-2) is a non-stationary camera.

## Patentansprüche

1. Verfahren zum Erzeugen eines ersten Farbbildes (405) aus einem ersten Nachtsichtbild (NIR_{In}), wobei das erste Farbbild in einem Farbraum ist, der zwischen Luminanz- und Chrominanzwerten unterscheidet, wobei das Verfahren Folgendes umfasst:
- Bestimmen (S41) einer Prognosefunktion (f_{Pred}), die Luminanzwerte von Nachtsichtbildern prognostizierten Chrominanzwerten (C_{VIS_Rec}) zuordnet, wobei die prognostizierten Chrominanzwerte (C_{VIS_Rec}) Chrominanzwerten von Farbbildern ähneln, die zu einer mit den Nachtsichtbildern korrespondierenden Tageszeit aufgenommen wurden, durch
∘ Beschaffen mehrerer Paare von Trainingsbildern, wobei jedes Paar ein Nachtsichtbild (NIR) und ein Farbbild (VIS) umfasst, wobei das Nachtsichtbild (NIR) und das Farbbild (VIS) eine überlappende und/oder im Wesentlichen identische interessierende Region (303, 304) abbilden;
∘ Bestimmen (S41) der Prognosefunktion (f_{Pred}) durch Trainieren eines Maschinenlernmodells an den Trainingsbildern, um die Chrominanzwerte (C_{VIS}) der Farbbilder (VIS) aus den Luminanzwerten (L_{NIR}) der Nachtsichtbilder (NIR) zu prognostizieren;
- Bestimmen (S403), unter Verwendung der Prognosefunktion (f_{Pred}), prognostizierte Chrominanzwerte (C_{VIS_Rec}) für das erste Farbbild, basierend auf Luminanzwerten (L_{NIR_In}) des ersten Nachtsichtbildes (NIR_{In});
- Erzeugen des ersten Farbbildes (405) durch Kombinieren (S404) der Luminanzwerte (L_{NIR_In}) des ersten Nachtsichtbildes (NIR_{In}) mit den prognostizierten Chrominanzwerten (C_{VIS_Rec});
wobei die zum Bestimmen der Prognosefunktion (f_{Pred}) genutzte Maschinenlernmethode auf neuronalen Netzwerken basiert; und
wobei das Nachtsichtbild (NIR) und das Farbbild (VIS) von mindestens einigen der mehreren Paare von Trainingsbildern separat aufgenommen werden,
wobei das Nachtsichtbild (NIR) bei Nacht oder unter dunklen Bedingungen aufgenommen wird und das entsprechende Farbbild (VIS) bei Tageszeit unter Ausnutzung von sichtbarem Licht aufgenommen wird.

2. Verfahren nach einem der vorangehenden Ansprüche, wobei die Prognosefunktion (f_{Pred}) die prognostizierten Chrominanzwerte (C_{VIS_Rec}) basierend auf den Luminanzwerten (L_{NIR_In}) des ersten Nachtsichtbildes (NIR_{In}) bestimmt, ohne erfasste Farb- und/oder Chrominanzwerte zu berücksichtigen, mit Ausnahme von Farb- und/oder Chrominanzwerten von Trainingsbildern, die zum Bestimmen der Prognosefunktion (f_{Pred}) verwendet werden.

3. Verfahren nach einem der Ansprüche 1 bis 2, wobei das erste Nachtsichtbild (NIR_{In}) und/oder die Nachtsichtbilder (NIR) der verschiedenen Paare von Trainingsbildern Infrarot- oder Nahinfrarotbilder sind, die während Verwendung einer aktiven Quelle von Infrarotbeleuchtung beschafft wurden.

4. Verfahren nach einem der Ansprüche 1 bis 3, ferner umfassend den Schritt des Anpassens der Prognosefunktion (f_{Pred}), wenn neue Paare von Trainingsbildern beschafft werden.

5. Verfahren nach einem der Ansprüche 1 bis 4, wobei die zum Bestimmen der Prognosefunktion (f_{Pred}) genutzte Maschinenlernmethode auf konvolutionalen neuronalen Netzwerken basiert.

6. Verfahren nach einem der Ansprüche 1 bis 5, wobei das Training der Prognosefunktion (f_{Pred}) ein Identifizieren von Merkmalszuordnungen (104) basierend auf charakteristischen Formen und Schattierungen der Paare von Trainingsbildern umfasst und wobei die prognostizierten Chrominanzwerte (C_{VIS_Rec}) durch die Prognosefunktion (f_{Pred}) basierend auf dem ersten Nachtsichtbild (NIR_{In}) unter Berücksichtigung der Merkmalszuordnungen (104) bestimmt werden.

7. System zum automatischen Erzeugen eines ersten Farbbildes (405) aus einem ersten Nachtsichtbild (NIR_{In}), wobei das erste Farbbild in einem Farbraum ist, der zwischen Luminanz- und Chrominanzwerten unterscheidet, wobei das System Folgendes umfasst:
- mindestens eine Kamera (201-1, 201-2), ausgebildet zum Erfassen des ersten Nachtsichtbildes (NIR_{In});
- eine Verarbeitungseinheit (203), ausgebildet zum Bestimmen, unter Verwendung einer Prognosefunktion (f_{Pred}), die Luminanzwerte von Nachtsichtbildern Chrominanzwerten entsprechender Farbbilder zuordnet, prognostizierter Chrominanzwerte (C_{VIS_Rec}) für das erste Farbbild, basierend auf den Luminanzwerten (L_{NIR_In}) des ersten Nachtsichtbildes (NIR_{In}); und zum Erzeugen des ersten Nachtsichtbildes (405) durch Kombinieren der Luminanzwerte (L_{NIR_In}) des ersten Nachtsichtbildes (NIR_{In}) mit den prognostizierten Chrominanzwerten (C_{VIS_Rec}) ;
- eine zweite Verarbeitungseinheit, die ausgelegt ist für (i) Beschaffen mehrerer Paare von Trainingsbildern, wobei jedes Paar ein Nachtsichtbild und ein entsprechendes Farbbild umfasst, wobei das Nachtsichtbild und das Farbbild überlappende und/oder im Wesentlichen identische interessierende Regionen abbilden; (ii) Bestimmen der Prognosefunktion (f_{Pred}) durch Trainieren einer Maschinenlernmethode zum Prognostizieren der Chrominanzwerte der Farbbilder aus den Luminanzwerten der Nachtsichtbilder, wobei die prognostizierten Chrominanzwerte (C_{VIS_Rec}) den Chrominanzwerten von Farbbildern ähneln, die zu einer Tageszeit entsprechend den Nachtsichtbildern aufgenommen wurden;
- eine Anzeige (204) zum Anzeigen des ersten Farbbildes (405) gegenüber einem Benutzer;
wobei die zum Bestimmen der Prognosefunktion (f_{Pred}) genutzte Maschinenlernmethode auf neuronalen Netzwerken basiert; und wobei das Nachtsichtbild (NIR) und das Farbbild (VIS) von mindestens einigen der mehreren Paare von Trainingsbildern separat aufgenommen wurden,
wobei das Nachtsichtbild (NIR) bei Nacht oder unter dunklen Bedingungen aufgenommen wurde und das entsprechende Farbbild (VIS) bei Tageszeit unter Ausnutzung von sichtbarem Licht aufgenommen wurde.

8. System nach Anspruch 7, wobei die mindestens eine Kamera eine Infrarotkamera ist und das System ferner Folgendes umfasst:
- mindestens eine Infrarotbeleuchtungsquelle, wobei die mindestens eine Kamera (S201-1, S201-2) dazu ausgelegt ist, die Infrarot- oder Nahinfrarotbilder zu erfassen, während die Infrarotbeleuchtungsquelle aktiv ist.

9. System nach Anspruch 7 oder 8, wobei
- die andere Verarbeitungseinheit ferner dazu ausgelegt ist, die Prognosefunktion (f_{Pred}) anzupassen, wenn neue Paare von Trainingsbildern beschafft werden.

10. Nutzung des Systems gemäß den Ansprüchen 7 bis 9 innerhalb eines Sicherheits- oder Überwachungssystems, wobei die Kamera (201-1, 201-2) eine stationäre Kamera ist.

11. Nutzung des Systems gemäß den Ansprüchen 7 bis 9 innerhalb eines Fahrerassistenzsystems, wobei die Kamera (201-1, 201-2) eine nicht-stationäre Kamera ist.

## Revendications

1. Méthode utilisée pour générer une première image couleur (405) à partir d'une première image de vision nocturne (NIR_{In}), la première image couleur étant dans un espace couleur qui fait la distinction entre les valeurs de luminance et les valeurs de chrominance, méthode comprenant
- la détermination (S41) d'une fonction de prédiction (f_{Pred}) qui met en correspondance les valeurs de luminance des images de vision nocturne avec les valeurs de chrominance prédites (C_{VIS_Rec}), les valeurs de chrominance prédites (C_{VIS_Rec}) étant similaires aux valeurs de chrominance des images en couleurs prises de jour correspondant aux images de vision nocturne par
∘ obtention de plusieurs paires d'images d'entraînement, chaque paire comprenant une image de vision nocturne (NIR) et une image couleur (VIS), l'image de vision nocturne (NIR) et l'image couleur (VIS) décrivant une région d'intérêt qui se chevauche et/ou qui est sensiblement identique (303, 304) ;
∘ détermination (S41) de la fonction de prédiction (f_{Pred}) en formant un modèle d'apprentissage automatique sur les images d'entraînement pour prédire les valeurs de chrominance (C_{VIS}) des images couleur (VIS) à partir des valeurs de luminance (L_{NIR}) des images de vision nocturne (NIR) ;
- la détermination (S403), en utilisant la fonction de prédiction (f_{Pred}), des valeurs de chrominance prédites (C_{VIS_Rec}) pour la première image couleur sur la base des valeurs de luminance (L_{NIR_In}) de la première image de vision nocturne (NIR_{In}) ;
- génération de la première image couleur (405) en combinant (S404) les valeurs de luminance (L_{NIR_In}) de la première image en vision nocturne (NIR_{In}) avec les valeurs de chrominance prédites (C_{VIS_Rec}) ;
où la méthode d'apprentissage automatique utilisée pour déterminer la fonction de prédiction (f_{Pred}) est basée sur des réseaux neuronaux ; et
où l'image de vision nocturne (NIR) et l'image couleur (VIS) d'au moins certaines des paires d'images d'entraînement sont prises séparément,
où l'image de vision nocturne (NIR) est prise de nuit ou dans des conditions d'obscurité et l'image couleur correspondante (VIS) est prise de jour en utilisant la lumière visible.

2. Méthode correspondant à l'une des revendications précédentes, où la fonction de prédiction (f_{Pred}) détermine les valeurs de chrominance prédites (C_{VIS_Rec}) sur la base des valeurs de luminance (L_{NIR_In}) de la première image de vision nocturne (NIR_{In}) sans tenir compte des valeurs de couleur et/ou de chrominance capturées à l'exception des valeurs de couleur et/ou de chrominance des images d'entraînement utilisées pour déterminer la fonction de prédiction (f_{Pred}),

3. Méthode correspondant à l'une des revendications 1 à 2, où la première image de vision nocturne (NIR_{In}) et/ou les images de vision nocturne (NIR) des différentes paires d'images d'entraînement sont des images infrarouges ou proche infrarouges obtenues en utilisant une source active d'éclairage infrarouge.

4. Méthode correspondant à l'une des revendications 1 à 3, comprenant en outre l'étape d'adaptation de la fonction de prédiction ((f_{Pred}) lorsque de nouvelles paires d'images d'entraînement sont obtenues.

5. Méthode correspondant à l'une des revendications 1 à 4, où la méthode d'apprentissage automatique utilisée pour déterminer la fonction de prédiction (f_{Pred}) est basée sur les réseaux neuronaux convolutifs.

6. Méthode correspondant à l'une des revendications 1 à 5, où l'entraînement de la fonction de prédiction (f_{Pred}) comprend l'identification de cartes de caractéristiques (104) basées sur des formes et l'ombrage caractéristiques des paires d'images d'entraînement et où les valeurs de chrominance prédites (C_{VIS_Rec}) sont déterminées par la fonction de prédiction (f_{Pred}) sur la base de la première image de vision nocturne (NIR_{In}) en tenant compte desdites cartes de caractéristiques (104).

7. Système utilisé pour générer automatiquement une première image couleur (405) à partir d'une première image de vision nocturne (NIR_{In}), la première image couleur étant dans un espace couleur qui fait la distinction entre les valeurs de luminance et les valeurs de chrominance, système comprenant :
- au moins une caméra (201-1, 201-2) configurée pour capturer la première image de vision nocturne (NIR_{In}) ;
- une unité de traitement (203) configurée pour déterminer, en utilisant une fonction de prédiction (f_{Pred}) qui fait correspondre les valeurs de luminance des images de vision nocturne aux valeurs de chrominance des images couleur correspondantes, les valeurs de chrominance prédites (C_{VIS_Rec}) pour la première image couleur sur la base des valeurs de luminance (L_{NIR_In}) de la première image en de nocturne (NIR_{In}) ; et pour générer la première image couleur (405) en combinant les valeurs de luminance (L_{NIR_In}) de la première image de vision nocturne (NIR_{In}) avec les valeurs de chrominance prédites (C_{VIS_Rec}) ;
- une seconde unité de traitement configurée pour (i) obtenir plusieurs paires d'images d'entraînement, chaque paire comprenant une image de vision nocturne et une image couleur correspondante, l'image de vision nocturne et l'image couleur représentant des régions d'intérêt se chevauchant et/ou sensiblement identiques ; (ii) déterminer la fonction de prédiction (f_{Pred}) grâce à l'apprentissage d'une méthode d'apprentissage automatique permettant de prédire les valeurs de chrominance des images couleur à partir des valeurs de luminance des images de vision nocturne, les valeurs de chrominance prédites (C_{VIS_Rec}) étant similaires aux valeurs de chrominance des images couleur prises le jour correspondant aux images de vision nocturne ;
- un écran (204) pour afficher la première image couleur (405) pour un utilisateur ;
où la méthode d'apprentissage automatique utilisée pour déterminer la fonction de prédiction (f_{Pred}) est basée sur des réseaux neuronaux ; et
où l'image de vision nocturne (NIR) et l'image couleur (VIS) d'au moins certaines des paires d'images d'entraînement ont été prises séparément, où l'image de vision nocturne (NIR) a été prise de nuit ou dans des conditions d'obscurité et l'image couleur correspondante (VIS) a été prise de jour en utilisant la lumière visible.

8. Système correspondant à la revendication 7, où au moins une caméra est une caméra infrarouge et où le système comprend, en outre :
- au moins une source d'éclairage infrarouge, où au moins une caméra (S201-1, S201-2) est configurée pour capturer les images infrarouges ou proches infrarouges lorsque la source d'éclairage infrarouge est active.

9. Système correspondant à la revendication 7 ou 8, où
- l'autre unité de traitement est, en outre, configurée pour adapter la fonction de prédiction (f_{Pred}) lorsque de nouvelles paires d'images d'entraînement sont obtenues.

10. Utilisation du système correspondant aux revendications 7 à 9 dans un système de sécurité ou de surveillance, où la caméra (201-1, 201-2) est une caméra stationnaire.

11. Utilisation du système correspondant aux revendications 7 à 9 dans un système d'assistance à la conduite, où la caméra (201-1, 201-2) est une caméra non stationnaire.
